(19) Europäisches Patentamt / European Patent Office / Office européen des brevets

(11) **EP 3 235 048 B1**

(12) **FASCICULE DE BREVET EUROPEEN**

(45) Date de publication et mention
de la délivrance du brevet:
**05.06.2019 Bulletin 2019/23**

(21) Numéro de dépôt: **15810761.5**

(22) Date de dépôt: **18.12.2015**

(51) Int Cl.:
**H01M 10/44** *(2006.01)* **H01M 10/0525** *(2010.01)*

(86) Numéro de dépôt international:
**PCT/EP2015/080586**

(87) Numéro de publication internationale:
**WO 2016/097340 (23.06.2016 Gazette 2016/25)**

(54) **PROCÉDÉ ET DISPOSITIF DE CHARGE D'UNE BATTERIE LITHIUM-ION PAR IMPULSIONS**

GEPULSTES LADEVERFAHREN FÜR LITHIUM-IONEN BATTERIEN UND APPARAT DAFÜR

PULSED CHARGING METHOD FOR LITHIUM ION BATTERIES AND APPARATUS THEREFOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2014 FR 1462984**

(43) Date de publication de la demande:
**25.10.2017 Bulletin 2017/43**

(73) Titulaire: **Commissariat à l'Énergie Atomique
et aux Énergies Alternatives
75015 Paris (FR)**

(72) Inventeurs:
• **ANAYA GARZON, Juan-David
38000 Grenoble (FR)**
• **KAROUI HENCHIRI, Fathia
73000 Chambéry (FR)**
• **KANAAN, Georges
73000 Chambéry (FR)**

(74) Mandataire: **Novaimo
ActiTech 8
60 avenue Marie Curie
Archamps Technopole
74166 Saint Julien-en-Genevois Cedex (FR)**

(56) Documents cités:
**US-A- 5 617 007        US-A- 6 094 034
US-A1- 2012 200 266**

• **LIANG-RUI CHEN: "Design of Duty-Varied
Voltage Pulse Charger for Improving Li-Ion
Battery-Charging Response", IEEE
TRANSACTIONS ON INDUSTRIAL
ELECTRONICS, IEEE SERVICE CENTER,
PISCATAWAY, NJ, USA, vol. 56, no. 2, 1 février
2009 (2009-02-01), pages 480-487, XP011233285,
ISSN: 0278-0046, DOI: 10.1109/TIE.2008.2002725**

**Description**

L'invention concerne un procédé et un dispositif de charge d'une batterie lithium-ion.

Une batterie lithium-ion est généralement chargée en deux phases. Lors de la première phase, la batterie est chargée avec un courant de charge constant jusqu'à ce que la tension de la batterie atteigne une limite supérieure de tension, par exemple de l'ordre de 4,2V. Cette première phase est suivie d'une deuxième phase de charge à tension constante jusqu'à ce que le courant de charge tombe à environ 3% de sa valeur nominale. Un tel processus de charge est lent. Il requiert typiquement plusieurs heures de charge. Pour réduire la durée de charge, il n'est cependant pas recommandé d'utiliser un courant de charge trop élevé, dépassant sa valeur nominale, ou une tension de charge supérieure à la limite supérieure de tension de la batterie. En effet, cela aurait pour effet de dégrader la batterie, du fait de l'accumulation de lithium métallique à l'interface électrode-électrolyte, ce qui augmente la résistance interne et réduit la durée de vie de la batterie.

Le document B. K. Purushothaman and U. Landau, "Rapid Charging of Lithium-Ion Batteries Using Pulsed Currents A Theoretical Analysis," J. Electrochem. Soc., vol. 153, no. 3, pp. A533-A542, Mar. 2006, décrit une solution pour diminuer la durée de charge d'une batterie lithium-ion. Le principe de la méthode proposée est d'appliquer à la batterie des impulsions de courant de charge, avec des périodes de relaxation. Différentes variantes de réalisation ont été envisagées en faisant varier l'amplitude des impulsions, la largeur des impulsions et la durée des périodes de relaxation. Ces trois paramètres permettent d'influer sur la diffusion des ions Li$^+$ à travers l'interface graphite/SEI (de l'anglais « Solide Electrolyte Interface ») et, par conséquent, de faire varier la vitesse de charge et la durée de vie de la batterie.

Des essais de la méthode proposée ci-dessus ont été réalisés avec des régimes de charge compris entre 0,025 et 1C. Il en ressort que la méthode ne permet pas d'atteindre une pleine charge de la batterie.

La présente invention vient améliorer la situation.

A cet effet, l'invention concerne un procédé de charge d'une batterie lithium-ion comprenant une étape de charge lors que laquelle on applique à la batterie une succession d'impulsions de courant de charge et comportant au moins deux phases successives de charge, la première phase étant caractérisée par des amplitudes de courant de charge en moyenne supérieures à un courant limite prédéfini et la deuxième phase étant caractérisée par des amplitudes de courant de charge en moyenne inférieures au courant limite prédéfini, caractérisé en ce que le courant limite prédéfini est un courant de charge standard spécifié par le constructeur de la batterie et en ce que les impulsions successives ont des amplitudes décroissantes et la deuxième phase a une vitesse de décroissance plus élevée que celle de la première phase.

Selon l'invention, la charge de la batterie s'effectue au moyen d'impulsions de courant de charge dont les amplitudes décroissent au cours du temps. Elle comprend deux phases :

- une première phase de charge pendant laquelle les amplitudes de courant de charge en moyenne supérieures à un courant limite prédéfini, égal au courant de charge standard spécifié par le constructeur, par exemple une première phase pendant laquelle la décroissance des amplitudes impulsionnelles est lente et le courant élevé, dans le but d'amener rapidement l'état de charge de la batterie jusqu'à un niveau relativement élevé ;

- une deuxième phase de charge pendant laquelle les amplitudes de courant de charge en moyenne inférieures au courant limite prédéfini, par exemple une deuxième phase pendant laquelle la décroissance des amplitudes impulsionnelles est rapide dans le but de faire décroître rapidement le courant de charge tout en complétant la charge de la batterie.

Le procédé de l'invention permet de charger pleinement la batterie tout en la protégeant contre un vieillissement prématuré et en garantissant une restitution de l'énergie cumulé, notamment à froid.

Avantageusement, les amplitudes des impulsions de courant de charge sont inférieures ou égales à un courant de charge maximal caractéristique de la batterie.

Grâce à cela, le courant appliqué durant la charge ne risque pas de détériorer la batterie.

Dans un mode de réalisation particulier, durant la première phase de charge, l'amplitude des impulsions de courant est comprise dans une plage de valeurs ayant une borne supérieure qui est égale à un courant maximal autorisé et une borne inférieure qui est supérieure ou égale à 50% dudit courant maximal autorisé, notamment supérieure ou égale à 80% du courant maximal autorisé. Ainsi, la première phase de charge à décroissance lente est déterminée de manière à ce que le courant de charge appliqué sous forme d'impulsions reste dans une plage prédéfinie comprise, par exemple entre le courant maximal autorisé et 90% du courant maximal autorisé.

Avantageusement, on surveille une grandeur physique relative à la batterie et, lorsqu'on détecte que ladite grandeur physique atteint une valeur limite prédéfinie, on commande un basculement de la première phase de charge à la deuxième phase de charge. La grandeur physique peut être l'une des grandeurs du groupe comprenant la tension de la batterie et l'état de charge de la batterie.

Il pourrait cependant être facultatif de surveiller une grandeur physique relative à la batterie pour déclencher le basculement de la première à la deuxième phase de charge. En effet, ce basculement pourrait être induit de façon automatique par le type de décroissance mis en oeuvre, par exemple par une décroissance exponentielle judicieusement paramétrée.

Avantageusement, on interrompt la charge sur détection d'une condition de fin de charge satisfaite, notamment un courant inférieur ou égal à un courant limite de fin de charge ou un état de charge correspondant à une pleine charge.

La première phase de charge peut présenter une décroissance exponentielle ou linéaire.

De même, la deuxième phase de charge peut présenter une décroissance exponentielle ou linéaire.

Dans un mode de réalisation particulier, les amplitudes des impulsions de charge successives décroissent de façon exponentielle suivant la relation :

$$I(N) = a.\exp(b.N) + c$$

où

- N est le numéro d'ordre d'une impulsion de charge ;
- $I(N)$ est le régime de la $N^{ième}$ impulsion de charge ;
- a est un réel négatif de valeur absolue strictement inférieure à 1 ;
- b est un réel positif de valeur absolue strictement inférieure à 1 ;
- c est un réel positif de valeur proche d'un courant maximal.

Dans une première variante de réalisation, durant l'étape de charge, on soumet la batterie à des impulsions de décharge.

Dans une deuxième variante de réalisation, l'étape de charge comprend une phase terminale de charge résiduelle durant laquelle les amplitudes des impulsions de charge successives sont constantes. Une telle phase terminale de charge peut être intéressante pour effectuer une charge résiduelle à courant faible jusqu'à atteindre une tension donnée et obtenir une pleine charge.

Dans une troisième variante de réalisation, l'étape de charge comprend au moins trois phases de charge successives, ayant des vitesses de décroissance respectives de plus en plus élevées.

Avantageusement, les impulsions de charge sont séparées par des périodes de repos.

Avantageusement encore, dans le cas où durant l'étape de charge, on soumet la batterie à des impulsions de décharge, la durée de chaque impulsion de charge est supérieure à la durée des périodes de repos qui est elle-même supérieure à la durée des impulsions de décharge.

Avantageusement encore, durant toute la charge, la tension de la batterie ne dépasse pas une tension maximale caractéristique de la batterie.

L'invention concerne aussi un dispositif de charge d'une batterie lithium-ion comprenant un module générateur d'impulsions successives de courant de charge, qui est adapté pour générer une succession d'impulsions de courant de charge suivant au moins deux phases successives de charge, la première phase étant caractérisée par des amplitudes de courant de charge en moyenne supérieures à un courant limite prédéfini et la deuxième phase étant caractérisée par des amplitudes de courant de charge en moyenne inférieures au courant limite prédéfini, caractérisé en ce que le courant limite prédéfini est égal à un courant de charge standard spécifié par le constructeur et en ce que le module générateur est adapté pour générer une succession d'impulsions de courant de charge suivant au moins deux phases successives de charge, la deuxième phase ayant une vitesse de décroissance plus élevée que celle de la première phase.

Avantageusement encore, le dispositif de charge comprend un module de test adapté pour surveiller une grandeur physique relative à la batterie et, lorsqu'on détecte que ladite grandeur physique atteint une valeur limite prédéfinie, on commande un basculement de la première phase de charge à la deuxième phase de charge.

L'invention sera mieux comprise à l'aide de la description suivante d'un mode de réalisation particulier du procédé de charge d'une batterie lithium-ion en référence aux dessins annexés sur lesquels :

- Les figures 1 à 5 représentent différents exemples de réalisation de profil de charge ;
- La figure 6 représente un exemple particulier de profil d'impulsions de courant ;
- La figure 7 représente l'évolution d'un courant de charge ;

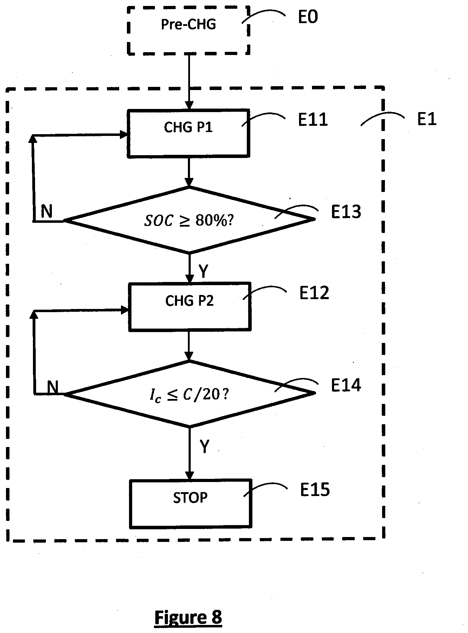

- La figure 8 représente un organigramme des étapes du procédé de charge ;
- La figure 9 représente un schéma bloc fonctionnel d'un dispositif de charge, selon une forme de réalisation particulière de l'invention.

Le procédé de charge de l'invention permet de charger une batterie de type lithium-ion. Par exemple, il peut s'agir d'une batterie de technologie lithium-ion Samsung-22F.

Une batterie lithium-ion possède les caractéristiques suivantes, généralement spécifiées par le fabricant :

- une capacité nominale de charge électrique, notée Q et exprimée en Ah (ampère-heure) ;
- un courant de charge standard $I_{std}$, exprimé en A (ampères) ;
- un courant maximal de charge $I_{max}$, exprimé en A (ampères) ;
- une tension maximale admissible $U_{max}$, exprimée en V (volts) ;
- une tension minimale admissible $U_{min}$, exprimée en V (volts) ;
- un critère de fin de charge.

La capacité nominale Q de charge électrique de la batterie est la quantité de courant que la batterie peut fournir en une heure, à une température de référence. Elle est exprimée en Ah (ampère-heure).

Par définition, on appelle «régime C» ou « régime 1C» le courant permettant de décharger la capacité nominale Q en 1 heure. On appelle « régime xC » le courant que fournirait la batterie en un nombre 1/x d'heure(s). Il est égal au produit de x et de Q, soit x.Q et est exprimé en A (ampères). Prenons l'exemple d'une batterie ayant une capacité Q égale à 5Ah. Le régime 1C ou C de cette batterie est égal à

$$\frac{Q(Ah)}{1(h)} = \frac{5Ah}{1h} = 5A,$$ soit un courant de 5A. Le régime 2,2C de cette même batterie est égal à

$$\frac{2,2 \times Q(Ah)}{1(h)} = \frac{2,2 \times 5Ah}{1h} = 11A,$$ soit un courant de 11A.

Le courant maximal de charge $I_{max}$, également appelé courant nominal de charge, est le courant maximal recommandé par le fabricant pour charger la batterie sans la détériorer. Ce courant maximal $I_{max}$ est ici égal au régime 1C de la batterie.

Le courant de charge standard $I_{std}$ est le courant de charge usuel ou type recommandé et spécifié par le fabricant ou constructeur de batterie, c'est-à-dire le courant d'utilisation ou de fonctionnement de la batterie en charge conseillé par le constructeur. Il est inférieur au courant maximal $I_{max}$. Par exemple, dans le cas d'une batterie ayant une capacité nominale de 2 A.h, le courant de charge standard $I_{std}$ spécifié par le constructeur de batterie est par exemple égal à C/2, soit 1 A.

La tension maximale $U_{max}$ de la batterie correspond à la tension de fin de charge maximale autorisée suivant la spécification du fabricant.

La tension minimale $U_{min}$ de la batterie correspond à la tension de fin de décharge minimale autorisée suivant la spécification du fabricant.

Le critère de fin de charge peut correspondre à un courant de fin de charge, une tension de fin de charge ou un état de charge (SOC), qu'il convient d'atteindre en fin de charge. Lorsque ce critère est rempli, on considère que la charge est terminée.

Le procédé de charge est mis en oeuvre par un dispositif de charge, qui sera décrit ultérieurement.

Il comprend une étape de charge E1 lors de laquelle on applique à la batterie une succession d'impulsions de courant de charge, que l'on appellera par la suite « impulsions de charge ». Dans un premier mode de réalisation particulier, les impulsions de charge successives sont séparées par des périodes de repos.

Chaque impulsion de charge est définie par une amplitude de courant Ic et par une durée d'impulsion $t_c$. Cette durée $t_c$ est par exemple comprise entre 1/10 seconde et 2 secondes. La durée $t_c$ des impulsions de charge est ici constante (c'est-à-dire identique pour toutes les impulsions). Toutefois, elle pourrait varier dans le temps.

Une période de repos est, par définition, une période durant laquelle le courant de charge est nul. Les périodes de repos ont une durée $t_r$. Cette durée $t_r$ est ici constante (c'est-à-dire identique pour toutes les périodes de repos). Elle est avantageusement strictement inférieure à la durée $t_c$ des impulsions de charge. Toutefois, elle pourrait varier dans le temps.

L'amplitude du courant de charge Ic varie dans le temps. Plus précisément, les impulsions de charge successives ont des amplitudes qui diminuent. La charge comprend au moins deux phases successives de charge : une première phase P1 de charge à décroissance « lente » E11 caractérisée par une première vitesse de décroissance et une deuxième phase P2 de charge à décroissance «rapide» E12 caractérisée par une deuxième vitesse de décroissance, la deuxième vitesse de décroissance étant supérieure à la première vitesse de décroissance. En d'autres termes, l'amplitude des impulsions de charge diminue plus vite durant la deuxième phase P2 que durant la première phase P1.

Par définition, la vitesse de décroissance d'une phase de charge correspond à la pente de la courbe enveloppe définie par les impulsions de courant.

La décroissance de chacune des phases de charge peut être par exemple linéaire ou exponentielle, comme cela sera explicité plus en détails ultérieurement.

Les impulsions de charge ont avantageusement des amplitudes inférieures ou égales à un courant de charge maximal $I_{max}$. Le courant de charge maximal $I_{max}$ est une caractéristique de la batterie, spécifiée par le fabricant. Dans le mode de réalisation décrit ici, en début de charge, le courant de charge appliqué est égal à $I_{max}$. Autrement dit, l'amplitude de la première impulsion de charge est égale à $I_{max}$. Ce courant correspond par exemple au régime 1C de la batterie.

Durant la première phase de charge P1 à décroissance « lente », les amplitudes respectives des impulsions de charge sont comprises dans une plage de valeurs ayant une borne supérieure qui est égale au courant maximal $I_{max}$ et une borne inférieure qui est supérieure ou égale à 50% du courant maximal $I_{max}$. Avantageusement, le courant de charge est proche de $I_{max}$, notamment compris entre $I_{max}$ et 80% de $I_{max}$. Dans l'exemple de réalisation particulier décrit ici, la borne inférieure est égale à 85% du courant maximal $I_{max}$. Ainsi, durant la première phase de décroissance, le courant de charge Ic reste dans une plage de courants prédéfinie qui est ici définie par la relation suivante : $85\%.I_{max} \leq Ic \leq I_{max}$.

Dans le mode de réalisation particulier décrit ici, la première phase de charge P1 correspond à une phase durant laquelle la tension de la batterie (et parallèlement son état de charge) augmente progressivement mais reste inférieure ou égale à une tension haute limite prédéfinie, par exemple égale à $U_{max}$. Cette tension limite correspond à un point de basculement entre la première phase de charge P1 et la deuxième phase de charge P2. En variante, on pourrait envisager que le point de basculement corresponde sensiblement à un état de charge limite, par exemple égal à 80%. Dans ce cas, la valeur de basculement de l'état de charge serait égale, ou proche, de 80%.

Parallèlement à l'étape E11, autrement dit à la première phase de charge P1, on peut exécuter une sous-étape de test E13, lors de laquelle on surveille une grandeur physique relative à la batterie. Le but de cette sous-étape de test E13 est de détecter le moment où cette grandeur physique atteint une valeur limite prédéfinie. Lorsqu'on détecte que la grandeur physique surveillée atteint la valeur limite prédéfinie « de basculement », on déclenche le basculement pour passer de la première phase de charge P1 à la deuxième phase de charge P2. La grandeur physique surveillée est par exemple la tension de la batterie. Dans ce cas, on détecte lorsque cette tension atteint une tension limite (ou de basculement), par exemple égale à $U_{max}$. En variante, on peut surveiller l'amplitude du courant de charge appliqué ou encore l'état de charge de la batterie.

Cette sous-étape de test E13 peut toutefois s'avérer facultative, notamment dans le cas d'une décroissance exponentielle des amplitudes des impulsions de charge, comme cela sera explicité plus loin.

Sur détection de la valeur limite de basculement de la grandeur physique surveillée (par exemple $U_{max}$), on déclenche la deuxième phase de charge E12 à décroissance rapide.

Durant la deuxième phase de charge E12, la vitesse de décroissance de des amplitudes des impulsions de charge est plus élevée. Un but de cette deuxième phase P2 à charge rapide est de réduire rapidement l'amplitude du courant de charge appliqué, tout en finalisant la charge.

Parallèlement à la deuxième phase de charge E12, on réalise, de façon connue, une sous-étape de test de fin de charge E14. Ce test E14 vise à vérifier si une condition de fin de charge est satisfaite. Sur détection que la condition de fin de charge est satisfaite, on interrompt la charge lors d'une sous-étape E15. Par exemple, la condition de fin de charge peut être que le courant de charge appliqué à la batterie est inférieur ou égal à un courant limite de fin de charge. Le courant limite de fin de charge peut être défini en « régime C » et être compris entre C/20 et C/50.

Dans le cas d'une décroissance linéaire des impulsions de charge, les amplitudes des impulsions de charge successives peuvent être données par la relation suivante :

$$P1: y_1 = a_1.N + b_1$$
$$P2: y_2 = a_2.N + b_2$$

tels que $a_2 < a_1 < 0$ ; $b_1, b_2 \in \mathbb{R} \neq 0$ et $y_1, y_2 > 0$ pour tout N.

Dans ce cas, la vitesse de décroissance des amplitudes des impulsions de courant est constante dans chacune des deux phases de charge, lente P1 et rapide P2, et varie brutalement au basculement entre les deux phases P1 et P2.

Dans le cas d'une décroissance exponentielle des impulsions de charge, les amplitudes des impulsions de charge successives peuvent être données par la relation suivante :

$$I(N) = a.exp(b.N) + c$$

où

- N est le numéro d'ordre d'une impulsion de charge ;
- $I(N)$ représente le régime de la N$^{ième}$ impulsion de charge ;
- a est un réel négatif de valeur absolue strictement inférieure à 1 ;
- b est un réel positif de valeur absolue strictement inférieure à 1 ;
- c'est un réel positif de valeur proche du courant maximal $I_{max}$.

Dans ce cas, la vitesse de décroissance des amplitudes des impulsions de courant augmente progressivement. La transition entre la première phase de charge à décroissance lente et la deuxième phase de charge à décroissance rapide peut s'effectuer lorsque cette vitesse de décroissance franchit un seuil de vitesse prédéfini. Ce seuil de vitesse peut être franchi de façon automatique, sans intervention sur la génération d'impulsions de charge. En variante, on peut surveiller une grandeur physique relative à la batterie, comme précédemment explicité. Par exemple, on peut surveiller l'état de charge de la batterie. Lorsque celui-ci atteint l'état de charge limite par exemple de 80%, on diminue si besoin la durée de quelques impulsions de charge, postérieures à la détection de l'état de charge limite, afin de franchir le plus rapidement possible le seuil de vitesse permettant de basculer de la première phase de charge à la deuxième phase de charge.

Dans une première variante de réalisation, les impulsions de charge successives ont des amplitudes décroissantes et la charge comprend N phases successives de décroissance avec $N \geq 3$. Notons i l'indice de chaque phase, i allant de 1 à N, et $v_i$ la vitesse de décroissance de chaque phase de charge d'indice i. La vitesse de décroissance $v_i$ de la phase d'indice i est supérieure à la vitesse de décroissance $v_{i-1}$ de la phase précédente d'indice i-1.

Dans une deuxième variante de réalisation, l'étape de charge E1 est précédée d'une étape de précharge E0. Une telle pré-charge est facultative. Toutefois, elle peut s'avérer nécessaire lorsque la tension initiale de la batterie (avant d'être rechargée) est inférieure à la tension minimale $U_{min}$ de la batterie. Une telle situation peut se produire lorsque la batterie a accidentellement était déchargée trop profondément. L'étape de pré-charge E0 peut consister à appliquer à la batterie un courant de pré-charge faible, par example de l'ordre de C/20, pendant une phase de pré-charge P0. Le courant de pré-charge peut être un courant constant et continu.

En variante encore, on pourrait faire précéder les phases de charge de type décroissantes par une phase initiale de charge de type croissante ou constante, comportant des impulsions de courant dont les amplitudes respectives augmentent jusqu'au courant $I_{max}$, par example de façon linéaire, ou stagnent.

Dans une troisième variante de réalisation, l'étape de charge E1 comprend une phase terminale de charge résiduelle $P_{rsd}$. Cette phase de charge résiduelle est mise en oeuvre après les phases de charge à impulsions de charge décroissantes. Durant la phase de charge résiduelle $P_{rsd}$, on peut appliquer un courant constant continu. L'amplitude du courant de charge résiduelle est avantageusement égale au courant limite de fin de charge de la dernière phase de charge.

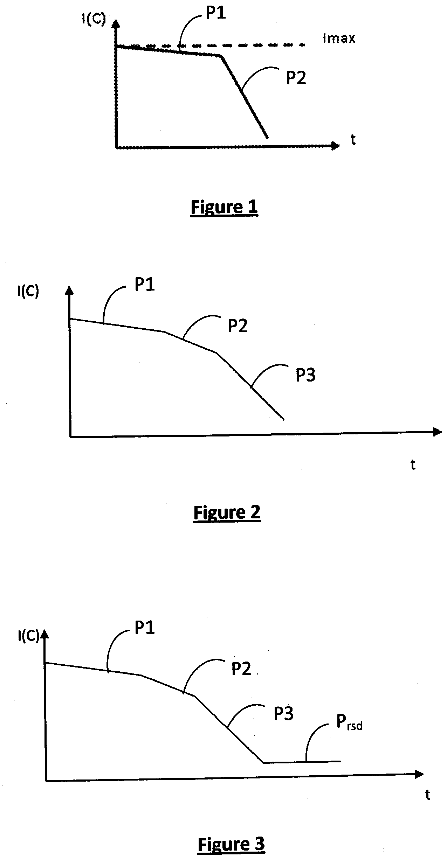

Différents exemples de charge sont illustrés par les figures 1 à 5. Celles-ci représentent des courbes enveloppes de charge qui sont définies par les impulsions de courant de charge d'amplitudes décroissantes.

La courbe enveloppe représentée sur la figure 1 comporte deux phases de charge successives à décroissance linéaire, la pente de la deuxième phase P2 étant plus importante que celle de la première phase P1.

La courbe enveloppe représentée sur la figure 2 comporte trois phases de charge successives à décroissance linéaire, la pente de la deuxième phase P2 (respectivement de la troisième phase P3) étant plus importante que celle de la première phase P1 (respectivement de la deuxième phase P2).

La courbe enveloppe représentée sur la figure 3 comporte trois phases de charge successives à décroissance linéaire, analogues à celles de la figure 2, suivies d'une quatrième phase de charge résiduelle $P_{rsd}$ d'amplitude constante. La quatrième phase de charge forme un plateau.

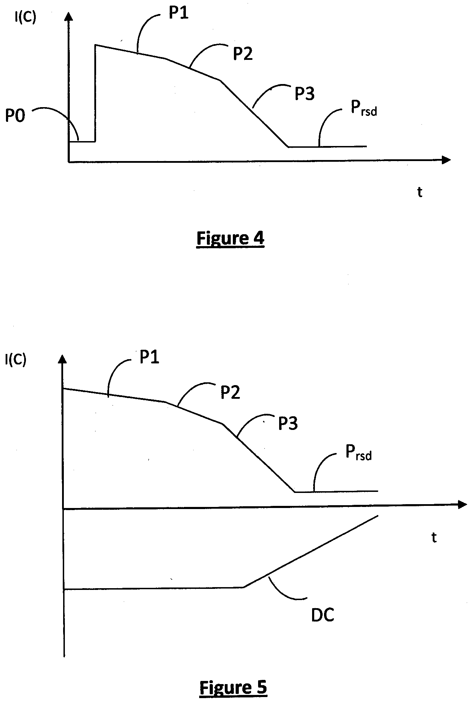

La courbe enveloppe représentée sur la figure 4 comporte trois phases de charge successives à décroissance linéaire suivies d'une quatrième phase de charge résiduelle d'amplitude constante, analogues à celles de la figure 3, et une phase initiale de pré-charge à croissance linéaire, qui précède les phases de charge.

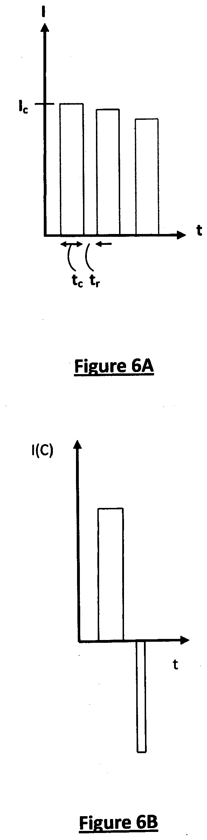

Dans une quatrième variante de réalisation, les impulsions successives de courant de charge sont séparées par des périodes des repos et par des impulsions de courant de décharge. La figure 6B représente à titre d'exemple illustratif une impulsion de courant de charge suivie d'une période de repos puis d'une impulsion de décharge. La durée $t_{dc}$ des impulsions de décharge est avantageusement inférieure à celle $t_r$ des périodes de repos.

Les phases de repos aident à relaxer la matière lors de la charge et redistribuer la charge tout au long le volume de l'électrode négative. Elles peuvent être accompagnées ou remplacées par des impulsions en décharge pour améliorer cette redistribution. Les impulsions de décharge peuvent être adaptées pour que la quantité de courant déchargée soit inférieure ou égale à 5% de la quantité de courant chargée. Par exemple, les impulsions de décharge peuvent avoir la même amplitude que les impulsions de charge et une durée égale à x% de la durée $t_c$ des impulsions de charge, x étant inférieur ou égal à 5, par example compris entre 0,2 et 5. Dans ce cas, l'accumulation de lithium est minimisée, tout en gardant une bonne efficacité énergétique.

On peut également envisager des impulsions de décharge adaptées pour que la quantité de courant déchargée soit supérieure à 5%, en particulier dans le but de préserver la durée de vie de la batterie. Les impulsions de décharge ont avantageusement une durée plus courte que celle des impulsions de charge.

La courbe enveloppe des impulsions de décharge, notée DC, peut être différente de celle des impulsions de charge. En variante, la courbe enveloppe des impulsions de décharge peut être identique à celle des impulsions de charge.

Les amplitudes des impulsions de décharge (en valeur absolue) peuvent être différentes de celles des impulsions de charge. Elles peuvent notamment être constantes ou décroître dans le temps. Cette décroissance peut être linéaire ou exponentielle.

En variante, les impulsions de charge sont séparées par des impulsions de décharge, sans périodes de repos. En variante encore, les impulsions de décharge sont concomitantes aux impulsions de charge qui sont séparées par des périodes de repos.

Les différentes variantes de réalisation qui viennent d'être décrites peuvent bien entendu être combinées.

Sur la figure 5, on a représenté une courbe enveloppe de charge analogue à celle de la figure 3 associée à une courbe enveloppe de décharge comportant une première phase constante suivie d'une phase à décroissance linéaire (l'amplitude des impulsions de décharge diminuant de façon linéaire au cours du temps).

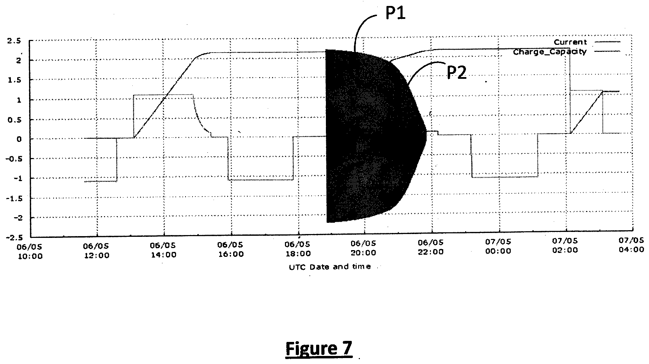

Sur la figure 7 (partie droite de la figure), on a représenté à titre d'exemple illustratif un profil de charge impulsionnelle comportant deux phases de charge à décroissance exponentielle d'une batterie dont le régime 1C vaut 2,2A. Le profil représenté est obtenu par la relation suivante :

$$I(N) = -0.0183 \cdot exp(0.002 \times N) + 1{,}018$$

où $I(N)$ est l'amplitude de la N$^{ième}$ impulsion de charge.

Sur l'exemple de la figure 7, la charge s'effectue par application d'une succession d'impulsions de charge, séparées par des périodes de repos et par des impulsions de décharge. Les impulsions de charge et les impulsions de décharge ont les mêmes amplitudes. La courbe enveloppe de charge est identique à la courbe enveloppe de décharge. Avantageusement, comme cela ressort de la figure 7, la durée de chaque impulsion de charge est supérieure à la durée des périodes de repos qui est elle-même supérieure à la durée des impulsions de décharge. Les impulsions de décharge ont une durée égale par exemple à 5% de celle des impulsions de charge.

La charge ainsi réalisée permet de gagner en énergie restituée tout en assurant une dégradation faible. En d'autres termes, grâce à l'invention, on augmente le rapport entre l'énergie que la batterie est capable de décharger et l'énergie fournie pour sa charge.

Durant toute la charge, la tension de la batterie reste inférieure ou égale à la tension maximale $U_{max}$ suivant la spécification du fabricant.

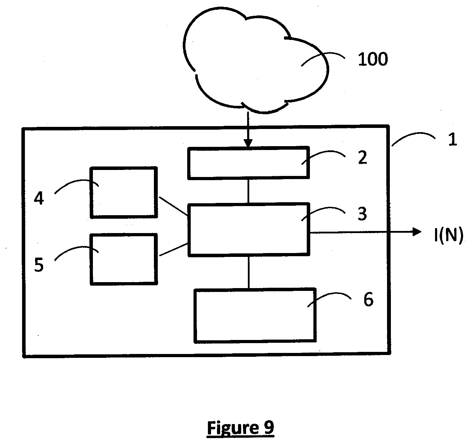

En référence à la figure 9, on va maintenant décrire le dispositif de charge adapté pour mettre en oeuvre le procédé qui vient d'être décrit.

Le dispositif de charge 1 comprend une interface 2 de connexion à une source d'énergie électrique, un module générateur d'impulsions de courant 3, un premier module de détection 4 pour détecter un point de basculement entre deux phases de charge, un deuxième module 5 de détection de fin de charge.

L'interface de connexion 2 est destinée à connecter le dispositif de charge à une source d'énergie électrique, par exemple à un réseau électrique 100.

Le générateur 3 est destiné à générer des impulsions de courant de charge séparées par des périodes de repos, comme précédemment explicité. Le générateur 3 est adapté pour faire varier ou stagner les amplitudes des impulsions de charge successives suivant la phase de charge. Il est adapté pour mettre en oeuvre les étapes de charge et le cas échéant de décharge, comme décrit dans les différents modes des réalisation du procédé de charge précédemment décrit. Le générateur 3 est destiné à mettre en oeuvre l'étape de charge E1 et, le cas échéant, l'étape de pré-charge E0.

Dans le cas d'un processus de charge incluant des impulsions de décharge, le générateur 3 est destiné à générer des impulsions de courant de décharge, comme précédemment explicité.

Le module de détection 4 est adapté pour surveiller une grandeur physique relative à la batterie et, lorsqu'il détecte que la grandeur physique atteint une valeur limite prédéfinie, pour commander un basculement de la première phase de charge à la deuxième phase de charge. Il est adapté pour exécuter la sous-étape de détection et de test E13.

Le module de détection 5 est adapté pour exécuter le test E14 et, en cas de test positif, pour commander l'arrêt de la charge (étape E15).

Le dispositif de charge 1 comprend également une unité centrale de traitement 6, en l'espèce un processeur, destiné à commander le fonctionnement des différents éléments du dispositif 1.

Le générateur 3 et les modules de test 4 et 5 comprennent des instructions logicielles, ou instructions machine, pour commander la mise en oeuvre des étapes de procédé E11 à E15 et le cas échéant E0, lorsque ces instructions sont exécutées par le processeur.

De façon plus générale, le procédé de charge d'une batterie lithium-ion selon l'invention comprend une étape de charge E1 lors que laquelle on applique à la batterie une succession d'impulsions de courant de charge, qui comprend au moins deux phases successives de charge telles que la première phase est caractérisée par des amplitudes de courant de charge en moyenne supérieures à un courant limite prédéfini et la deuxième phase est caractérisée par des amplitudes de courant de charge en moyenne inférieures au courant limite prédéfini. Ce courant de charge limite prédéfini est avantageusement égal au courant de charge standard de la batterie, spécifié par le constructeur de batterie par exemple dans les « data sheet » ou la fiche technique de la batterie. Dans ce cas, la charge comprend deux phases impulsionnelles comprenant une première phase à amplitude de courant élevée et une deuxième phase à amplitude de courant plus faible. Ces phases peuvent ne pas être « décroissantes » comme dans le mode de réalisation précédemment décrit. Dans ce cas, le module générateur 3 du dispositif de charge est adapté pour générer une succession d'impulsions de courant de charge suivant au moins deux phases successives de charge, la première phase étant caractérisée par des amplitudes de courant de charge en moyenne supérieures à un courant limite prédéfini et la deuxième phase étant caractérisée par des amplitudes de courant de charge en moyenne inférieures au courant limite prédéfini.

## Revendications

**1.** Procédé de charge d'une batterie lithium-ion comprenant une étape de charge (E1), lors de laquelle on applique à la batterie une succession d'impulsions de courant de charge, comportant au moins deux phases (P1, P2) successives de charge, la première phase étant **caractérisée par** des amplitudes de courant de charge en moyenne supérieures à un courant limite prédéfini et la deuxième phase étant **caractérisée par** des amplitudes de courant de charge en moyenne inférieures au courant limite prédéfini, **caractérisé en ce que** le courant limite prédéfini est un courant de charge standard spécifié par le constructeur de la batterie et **en ce que** les impulsions successives ont des amplitudes décroissantes et la deuxième phase (P2) a une vitesse de décroissance plus élevée que celle de la première phase (P1).

**2.** Procédé selon la revendication précédente, **caractérisé en ce que** les amplitudes des impulsions de courant de charge sont inférieures ou égales à un courant de charge maximal ($I_{max}$) caractéristique de la batterie.

**3.** Procédé selon la revendication 2, **caractérisé en ce que**, durant la première phase de charge (P1), l'amplitude des impulsions de courant est comprise dans une plage de valeurs ayant une borne supérieure qui est égale au courant de charge maximal ($I_{max}$) et une borne inférieure qui est supérieure ou égale à 50% dudit courant de charge maximal ($I_{max}$), notamment supérieure ou égale à 80% du courant de charge maximal ($I_{max}$).

**4.** Procédé selon l'une des revendications précédentes, **caractérisé en ce qu'**on surveille une grandeur physique relative à la batterie (E13) et, lorsqu'on détecte que ladite grandeur physique atteint une valeur limite prédéfinie, on commande un basculement de la première phase de charge (P1) à la deuxième phase de charge (P2), ladite grandeur physique étant par exemple l'une des grandeurs du groupe comprenant la tension de la batterie et l'état de charge de la batterie.

**5.** Procédé selon l'une des revendications précédentes, **caractérisé en ce qu'**on interrompt (E15) la charge sur détection (E14) d'une condition de fin de charge satisfaite, notamment un courant inférieur ou égal à un courant limite de fin de charge ou un état de charge correspondant à une pleine charge.

**6.** Procédé selon l'une des revendications précédentes, **caractérisé en ce que** la première phase de charge (P1) présente une décroissance exponentielle ou une décroissance linéaire.

**7.** Procédé selon l'une des revendications précédentes, **caractérisé en ce que** la deuxième phase de charge (P2) présente une décroissance exponentielle ou une décroissance linéaire.

**8.** Procédé selon l'une des revendications 1 à 7, **caractérisé en ce que** les amplitudes des impulsions de charge successives décroissent de façon exponentielle suivant la relation :

$$I(N) = a.\exp(b.N) + c$$

où

- N est le numéro d'ordre d'une impulsion de charge ;
- $I(N)$ est le régime de la $N^{ième}$ impulsion de charge ;
- a est un réel négatif de valeur absolue strictement inférieure à 1 ;
- b est un réel positif de valeur absolue strictement inférieure à 1 ;
- c est un réel positif de valeur proche d'un courant maximal.

**9.** Procédé selon l'une des revendications précédentes, **caractérisé en ce que**, durant l'étape de charge (E12), on soumet la batterie à des impulsions de décharge.

**10.** Procédé selon l'une des revendications précédentes, **caractérisé en ce que** l'étape de charge comprend une phase terminale de charge résiduelle ($P_{rsd}$) durant laquelle les amplitudes des impulsions de charge successives sont constantes.

**11.** Procédé selon l'une des revendications précédentes, **caractérisé en ce que** l'étape de charge comprend au moins trois phases de charge successives (P1, P2, P3), ayant des vitesses de décroissance respectives de plus en plus élevées.

**12.** Procédé selon l'une des revendications précédentes, **caractérisé en ce que** les impulsions de charge sont séparées par des périodes de repos.

**13.** Procédé selon la revendication précédente, **caractérisé en ce que**, dans le cas où durant l'étape de charge (E12) on soumet la batterie à des impulsions de décharge, la durée de chaque impulsion de charge est supérieure à la durée des périodes de repos qui est elle-même supérieure à la durée des impulsions de décharge.

**14.** Dispositif de charge d'une batterie lithium-ion comprenant un module (3) générateur d'impulsions successives de courant de charge, qui est adapté pour générer une succession d'impulsions de courant de charge suivant au moins deux phases successives de charge (P1, P2), la première phase étant **caractérisée par** des amplitudes de courant de charge en moyenne supérieures à un courant limite prédéfini et la deuxième phase étant **caractérisée par** des amplitudes de courant de charge en moyenne inférieures au courant limite prédéfini, **caractérisé en ce que** le courant limite prédéfini est un courant de charge standard spécifié par le constructeur de la batterie et le module générateur (3) est adapté pour générer une succession d'impulsions de courant de charge d'amplitudes décroissantes suivant au moins deux phases successives de charge (P1, P2), la deuxième phase ayant une vitesse de décroissance plus élevée que celle de la première phase.

**15.** Dispositif selon la revendication précédente, **caractérisé en ce qu'**il comprend un module de test (4) qui est adapté pour surveiller une grandeur physique relative à la batterie et, lorsqu'on détecte que ladite grandeur physique atteint une valeur limite prédéfinie, on commande un basculement de la première phase de charge (P1) à la deuxième phase de char-

**ge (P2).**

**Patentansprüche**

1. Ladeverfahren für eine Lithium-Ionen-Batterie, das einen Schritt des Ladens (E1) beinhaltet, bei dem eine Folge von Ladestromimpulsen auf die Batterie angewendet wird, umfassend mindestens zwei aufeinanderfolgende Ladephasen (P1, P2), wobei die erste Phase durch Ladestromamplituden gekennzeichnet ist, die im Durchschnitt größer als ein vorab definierter Stromgrenzwert sind, und die zweite Phase durch Ladestromamplituden gekennzeichnet ist, die im Durchschnitt kleiner als der vorab definierte Stromgrenzwert sind, **dadurch gekennzeichnet, dass** der vorab definierte Stromgrenzwert ein vom Hersteller der Batterie vorgegebener Standardladestrom ist und dass die aufeinanderfolgenden Impulse abnehmende Amplituden aufweisen und dass die zweite Phase (P2) eine höhere Abnahmegeschwindigkeit als die erste Phase (P1) aufweist.

2. Verfahren nach dem vorhergehenden Anspruch, **dadurch gekennzeichnet, dass** die Amplituden der Ladestromimpulse kleiner oder gleich einem der Batterie eigenen maximalen Ladestrom ($I_{max}$) sind.

3. Verfahren nach Anspruch 2, **dadurch gekennzeichnet, dass** während der ersten Ladephase (P1) die Amplitude der Stromimpulse in einem Bereich von Werten liegt, der eine obere Grenze, die gleich dem maximalen Ladestrom ($I_{max}$) ist, und eine untere Grenze aufweist, die größer als oder gleich 50 % des maximalen Ladestroms ($I_{max}$) ist, insbesondere größer als oder gleich 80 % des maximalen Ladestroms ($I_{max}$).

4. Verfahren nach einem der vorhergehenden Ansprüche, **dadurch gekennzeichnet, dass** eine physikalische Größe, die sich auf die Batterie bezieht, überwacht wird (E13) und, wenn erfasst wird, dass die physikalische Größe einen vorab definierten Grenzwert erreicht, ein Übergang von der ersten Ladephase (P1) zur zweiten Ladephase (P2) befohlen wird, wobei die physikalische Größe beispielsweise eine der Größen aus der Gruppe ist, die die Spannung der Batterie und den Ladezustand der Batterie beinhaltet.

5. Verfahren nach einem der vorhergehenden Ansprüche, **dadurch gekennzeichnet, dass** bei Detektion (E14) eines Zustands einer erfolgten Beendigung der Ladung, insbesondere eines Stroms, der kleiner oder gleich einem Stromgrenzwert einer Beendigung der Ladung ist, oder eines Ladezustands, der einer vollen Ladung entspricht, die Ladung unterbrochen wird (E15).

6. Verfahren nach einem der vorhergehenden Ansprüche, **dadurch gekennzeichnet, dass** die erste Ladephase (P1) eine exponentielle Abnahme oder eine lineare Abnahme aufweist.

7. Verfahren nach einem der vorhergehenden Ansprüche, **dadurch gekennzeichnet, dass** die zweite Ladephase (P2) eine exponentielle Abnahme oder eine lineare Abnahme aufweist.

8. Verfahren nach einem der Ansprüche 1 bis 7, **dadurch gekennzeichnet, dass** die Amplituden der aufeinanderfolgenden Ladeimpulse gemäß dem folgenden Verhältnis exponentiell abnehmen:

$$I(N) = a.exp(b.N) + c$$

wobei

- N die laufende Nummer eines Ladeimpulses ist;
- I (N) die Stärke des N$^{ten}$ Ladeimpulses ist;
- a eine negative reelle Zahl mit einem Absolutbetrag streng kleiner als 1 ist;
- b eine positive reelle Zahl mit einem Absolutbetrag streng kleiner als 1 ist;
- c eine positive reelle Zahl mit einem Wert nahe an einem maximalen Strom ist.

9. Verfahren nach einem der vorhergehenden Ansprüche, **dadurch gekennzeichnet, dass** die Batterie während des Ladeschritts (E12) Entladeimpulsen ausgesetzt wird.

10. Verfahren nach einem der vorhergehenden Ansprüche, **dadurch gekennzeichnet, dass** der Ladeschritt eine Restladeendphase ($P_{rsd}$) beinhaltet, während der die Amplituden der aufeinanderfolgenden Ladeimpulse konstant sind.

11. Verfahren nach einem der vorhergehenden Ansprüche, **dadurch gekennzeichnet, dass** der Ladeschritt mindestens drei aufeinanderfolgende Ladephasen (P1, P2, P3) beinhaltet, die jeweils eine immer höhere Abnahmegeschwindigkeit aufweisen.

12. Verfahren nach einem der vorhergehenden Ansprüche, **dadurch gekennzeichnet, dass** die Ladeimpulse durch Ruheperioden getrennt sind.

13. Verfahren nach dem vorhergehenden Anspruch, **dadurch gekennzeichnet, dass**, falls die Batterie während des Ladeschritts (E12) Entladeimpulsen ausgesetzt wird, die Dauer jedes Ladeimpulses größer als die Dauer der Ruheperioden ist, die selbst wiederum größer als die Dauer der Entladeimpulse ist.

14. Ladevorrichtung einer Lithium-Ionen-Batterie, die ein Modul (3) zum Erzeugen aufeinanderfolgender Ladestromimpulse beinhaltet, das dazu ausgeführt ist, eine Folge von Ladestromimpulsen zu erzeugen, die auf mindestens zwei aufeinanderfolgende Ladephasen (P1, P2) folgt, wobei die erste Phase durch Ladestromamplituden gekennzeichnet ist, die im Durchschnitt größer als ein vorab definierter Stromgrenzwert sind, und die zweite Phase durch Ladestromamplituden gekennzeichnet ist, die im Durchschnitt kleiner als der vorab definierte Stromgrenzwert sind, **dadurch gekennzeichnet, dass** der vorab definierte Stromgrenzwert ein vom Hersteller der Batterie vorgegebener Standardladestrom ist und dass das Modul (3) zum Erzeugen dazu ausgeführt ist, eine Folge von Ladestromimpulsen mit abnehmenden Amplituden zu erzeugen, die auf mindestens zwei aufeinanderfolgende Ladephasen (P1, P2) folgt, wobei die zweite Phase eine höhere Abnahmegeschwindigkeit als die erste Phase aufweist.

15. Vorrichtung nach dem vorhergehenden Anspruch, **dadurch gekennzeichnet, dass** sie ein Prüfmodul (4) beinhaltet, das dazu ausgeführt ist, eine physikalische Größe, die sich auf die Batterie bezieht, zu überwachen, und dass, wenn erfasst wird, dass die physikalische Größe einen vorab definierten Grenzwert erreicht, ein Übergang von der ersten Ladephase (P1) in die zweite Ladephase (P2) befohlen wird.

**Claims**

1. Method for charging a lithium-ion battery, comprising a charging step (E1) in which a succession of charging current pulses are applied to the battery, including at least two successive charging phases (P1, P2), the first phase being **characterized by** charging current amplitudes on average greater than a predefined limit current and the second phase being **characterized by** charging current amplitudes on average lower than the predefined limit current, **characterized in that** the predefined limit current is a standard charging current specified by the battery manufacturer and **in that** the successive pulses have decreasing amplitudes and the second phase (P2) has a rate of decrease higher than that of the first phase (P1).

2. Method according to the preceding claim, **characterized in that** the amplitudes of the charging current pulses are lower than or equal to a characteristic maximum charging current ($I_{max}$) of the battery.

3. Method according to Claim 2, **characterized in that**, during the first charging phase (P1), the amplitude of the current pulses is within a range of values having an upper limit that is equal to the maximum charging current ($I_{max}$) and a lower limit that is greater than or equal to 50% of said maximum charging current ($I_{max}$), in particular greater than or equal to 80% of the maximum charging current ($I_{max}$).

4. Method according to one of the preceding claims, **characterized in that** a physical variable in relation to the battery is monitored (E13) and, when it is detected that said physical variable reaches a predefined limit value, switching from the first charging phase (P1) to the second charging phase (P2) is commanded, said physical variable being for example one of the variables from the group comprising the voltage of the battery and the state of charge of the battery.

5. Method according to one of the preceding claims, **characterized in that** the charging is interrupted (E15) upon detecting (E14) that an end of charging condition is satisfied, in particular a current lower than or equal to an end of charge limit current or a state of charge corresponding to a full charge.

6. Method according to one of the preceding claims, **characterized in that** the first charging phase (P1) exhibits an exponential decrease or a linear decrease.

7. Method according to one of the preceding claims, **characterized in that** the second charging phase (P2) exhibits an exponential decrease or a linear decrease.

8. Method according to one of Claims 1 to 7, **characterized in that** the amplitudes of the successive charging pulses decrease exponentially according to the relationship:

$$I(N) = a.exp(b.N) + c$$

where

  - N is the order number of a charging pulse;
  - *I(N)* is the state of the Nth charging pulse;
  - a is a negative real number with an absolute value strictly lower than 1;
  - b is a positive real number with an absolute value strictly lower than 1;
  - c is a positive real number with a value close to a maximum current.

9. Method according to one of the preceding claims, **characterized in that**, during the charging step (E12), the battery is subjected to discharging pulses.

**10.** Method according to one of the preceding claims, **characterized in that** the charging step comprises a terminal residual charging phase ($P_{rsd}$) during which the amplitudes of the successive charging pulses are constant.

**11.** Method according to one of the preceding claims, **characterized in that** the charging step comprises at least three successive charging phases (P1, P2, P3), having respective increasingly higher rates of decrease.

**12.** Method according to one of the preceding claims, **characterized in that** the charging pulses are separated by rest periods.

**13.** Method according to the preceding claim, **characterized in that**, if the battery is subjected to discharging pulses during the charging step (E12), the duration of each charging pulse is greater than the duration of the rest periods, which is itself greater than the duration of the discharging pulses.

**14.** Device for charging a lithium-ion battery, comprising a generator module (3) for generating successive charging current pulses, which module is designed to generate a succession of charging current pulses in at least two successive charging phases (P1, P2), the first phase being **characterized by** charging current amplitudes on average greater than a predefined limit current and the second phase being **characterized by** charging current amplitudes on average lower than the predefined limit current, **characterized in that** the predefined limit current is a standard charging current specified by the battery manufacturer and the generator module (3) is designed to generate a succession of charging current pulses having decreasing amplitudes in at least two successive charging phases (P1, P2), the second phase having a rate of decrease higher than that of the first phase.

**15.** Device according to the preceding claim, **characterized in that** it comprises a test module (4) that is designed to monitor a physical variable in relation to the battery and, when it is detected that said physical variable reaches a predefined limit value, switching from the first charging phase (P1) to the second charging phase (P2) is commanded.

**Figure 1**

**Figure 2**

**Figure 3**

I(C)

P0    P1    P2    P3    P_{rsd}

t

**Figure 4**

I(C)

P1    P2    P3    P_{rsd}

t

DC

**Figure 5**

**Figure 6A**

**Figure 6B**

**Figure 7**

**Figure 8**

**Figure 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. K. PURUSHOTHAMAN ; U. LANDAU.** Rapid Charging of Lithium-Ion Batteries Using Pulsed Currents A Theoretical Analysis. *J. Electrochem. Soc.,* Mars 2006, vol. 153 (3), A533-A542